# EUROPÄISCHE PATENTSCHRIFT

(11) **EP 3 430 118 B1**
(45) Veröffentlichungstag und Bekanntmachung des Hinweises auf die Patenterteilung: **26.08.2020**
(21) Anmeldenummer: 17707585.0
(22) Anmeldetag: 03.03.2017
(51) Int. Cl.: C11D 7/50, C11D 11/00, C09D 9/00

(54) **REINIGUNGSZUSAMMENSETZUNG**
CLEANING COMPOSITION
COMPOSITION DE NETTOYAGE

(30) Priorität: 14.03.2016 EP 16160080
(43) Veröffentlichungstag der Anmeldung: 23.01.2019
(73) Patentinhaber: BASF Coatings GmbH, 48165 Münster (DE)
(72) Erfinder: STEINMETZ, Bernhard, 48165 Muenster (DE); JANKOWSKI, Peggy, 97080 Wuerzburg (DE); LUHMANN, Nadia, 97080 Wuerzburg (DE); MATURA, Michael, 97080 Wuerzburg (DE)
(74) Vertreter: BASF IP Association
(86) Internationale Anmeldenummer: PCT/EP2017/054996
(87) Internationale Veröffentlichungsnummer: WO 2017/157694

(56) Entgegenhaltungen:
- DE-A1- 19 526 351
- DE-A1-102011 000 083
- US-A- 2 694 658
- US-A1- 2014 147 395

## Beschreibung

Die vorliegende Erfindung betrifft eine neuartige Reinigungszusammensetzung, die sich hervorragend zur Reinigung unterschiedlichster Anlagensysteme im industriellen Gebrauch und Teilen solcher Anlagen eignet. Insbesondere eignet sich die Reinigungszusammensetzung zur Reinigung von Rohrleitungen in Produktionsstätten von Lacken, beispielsweise Lacken für die Fahrzeuglackierung.

### Stand der Technik

Im Bereich der industriellen Fahrzeuglackierung, beispielsweise der Automobilserienlackierung, kommen Anlagen mit komplexen Rohrleitungssystemen zu Einsatz, um die entsprechenden Lacke zum Applikationsort zu befördern. Beispielhaft seien die an sich bekannten Ringleitungsanlagen genannt.

Für die Reinigung dieser Anlagen sind insbesondere zwei Faktoren zu berücksichtigen, die diesen Vorgang besonders herausfordernd gestalten. Zum einen sind wesentliche Teile der Rohrleitungsanlagen nur schwer zugänglich, haben dabei aber eine große Oberfläche, auf der sich Verschmutzungen ablagern beziehungsweise festsetzen können. Zum zweiten neigen gerade komplexe Lackformulierungen dazu, sehr hartnäckige und nur schwer entfernbare Verschmutzungen zu erzeugen. So können durch verschiedene organische Bestandteile, insbesondere physikalisch härtbare Bindemittel sowie verschiedenste Additivkomponenten wie hoch hydrophobe Silikonderivate und anorganische Komponenten, insbesondere Pigmente und Füllstoffe, besonders intensive Verkrustungen und Ablagerungen entstehen. Auch prozessbedingte Kontaminationen in den Rohrleitungen wie beispielsweise hoch hydrophobe Schmiermittel gestalten die Reinigung der Anlagen als sehr herausfordernd.

Bekannt sind bei industriellen Anwendungen unterschiedliche Reinigungskomponenten und -zusammensetzungen, die aber die oben genannten Probleme bei der Reinigung nicht immer zufriedenstellend lösen können und/oder die signifikante Anteile von gesund- und umweltschädlichen Komponenten enthalten. So ist das grundsätzlich zur Reinigung bekannte Dimethylsulfoxid (DMSO) nicht in der Lage, jegliche Art von Verunreinigung angemessen zu entfernen. Das ebenfalls grundsätzlich sehr reinigungswirksame NMP (1-Methyl-2-pyrrolidon) ist bekanntermaßen als giftige und fruchtschädigende Komponente eingestuft.

### [siehe Zusatzseite 2a]

### Aufgabe

Der vorliegenden Erfindung lag also die Aufgabe zugrunde, eine Möglichkeit bereitzustellen, mit der besonders gut die oben genannten Verschmutzungen beseitigt werden können und bei der zugleich auf den Einsatz besonders gesund- und umweltschädlicher Komponenten verzichtet werden kann.

### Lösung

Die genannte Aufgabe konnte anhand einer neuen Reinigungszusammensetzung gelöst werden, umfassend
20 bis 90 Gew.-% Dimethylsulfoxid,
5 bis 30 Gew.-% mindestens eines Mineralöls (M), und
5 bis 50 Gew.-% mindestens eines bipolaren organischen Lösemittels (L) ausgewählt aus der Gruppe der aliphatischen Monoalkohole mit 4 bis 14 Kohlenstoffatomen, wobei die angegebenen Anteilsbereiche jeweils auf das Gesamtgewicht der Reinigungszusammensetzung bezogen sind.

Die neue Reinigungszusammensetzung ist Gegenstand der vorliegenden Erfindung und wird in der Folge auch als erfindungsgemäße Reinigungszusammensetzung bezeichnet. Bevorzugte Ausführungsformen der erfindungsgemäßen Reinigungszusammensetzung gehen aus der folgenden Beschreibung sowie den Unteransprüchen hervor.

Gegenstand der vorliegenden Erfindung ist auch ein Verfahren zur Reinigung von Gegenständen, Bauteilen und/oder Anlagen sowie Teilen solcher Anlagen, bei dem die erfindungsgemäße Reinigungszusammensetzung zur Anwendung gebracht wird.

DE19526351 A1 offenbart ein Lösegel enthaltend 30-70 Gew.-% 1,3 Dioxalan, Methyl-tert-butylether und/oder THF, 8-25 Gew.-% Alkylacetat und 8-30 Gew.-% DMSO.

DE 102011000083 A1 offenbart ein Verfahren zur Aufarbeitung von gebrauchten Gummitüchern, wobei eine Zusammensetzung verwendet wird, die unter Anderem 20-40 Gew.-% Dimethylsulfoxid und 2 bis 10 Gew.-% zumindest eines C9- bis C12-Isoalkans enthält.

US 2014/0147395 A1 offenbart in einem Beispiel 91 eine Graffiti-Reinigungsformulierung, die DMSO, Solvesso 150 ND, Ketal und Ethyl-3-ethoxypropionat enthält.

Es hat sich gezeigt, dass durch die Reinigungszusammensetzung beziehungsweise deren Einsatz in einem Verfahren zur Reinigung eine hervorragende Säuberung unterschiedlichster Gegenstände, Bauteile und/oder Anlagen sowie Teilen solcher Anlagen erfolgen kann. Überraschenderweise ist die säubernde Wirkung der Zusammensetzung deutlich besser, als die der Einzelkomponenten. Aus diesem Grund bietet sich die Zusammensetzung beziehungsweise das Verfahren besonders im Bereich der Reinigung von Anlagen mit komplexen Rohrleitungssystemen, beispielsweise Ringleitungsanlagen im Bereich der Fahrzeugindustrie, an.

### Beschreibung

Die erfindungsgemäße Reinigungszusammensetzung enthält Dimethylsulfoxid. Die grundsätzliche Möglichkeit, Dimethylsulfoxid als Reinigungsmittel verwenden zu können, ist bekannt. Jedoch entfaltet diese Komponente nur in Kombination mit den nachfolgend beschriebenen Komponenten eine herausragende Reinigungswirkung.

Der Anteil von Dimethylsulfoxid beträgt, bezogen auf die Gesamtmenge der Reinigungszusammensetzung, von 20 bis 90 Gew.-%. Bevorzugte Anteilsbereiche sind von 35 bis 80 Gew.-%, nochmals bevorzugt 50 bis 70 Gew.-%.

Die erfindungsgemäße Reinigungszusammensetzung enthält zudem mindestens ein Mineralöl (M).

Im Rahmen der vorliegenden Erfindung können die dem Fachmann an sich bekannten Mineralöle eingesetzt werden. Es handelt sich bekanntermaßen um Öle, die durch Destillation von fossilen Rohstoffen wie Erdöl gewonnen werden und deren hauptsächliche Anteile paraffinische (gesättigte acyclische Kohlenwasserstoffe), naphthenische (gesättigt cyclische Kohlenwasserstoffe) und/oder aromatische Kohlenwasserstoffe sind. In der Regel enthalten diese Destillate zudem geringe Mengen unterschiedlicher schwefel- und/oder stickstoffhaltiger organischer Verbindungen sowie olefinische Kohlenwasserstoffe. Mineralöle sind im Unterschied zu Mineralfetten und Mineralwachsen bei Normalbedingungen (1,013 hPa, 20°C) fluide und eben nicht wachsartig oder fest. Sie enthalten entsprechend höhere Anteile an eher kurzkettigen Kohlenwasserstoffen. Bevorzugte Mineralöle haben eine Viskosität von nicht mehr als 1000 mPas, nochmals bevorzugt nicht mehr als 500 mPas und insbesondere bevorzugt nicht mehr als 100 mPas bei 25°C (ASTM D 445).

Bevorzugt werden im Rahmen der vorliegenden Erfindung aufgrund des gesund- und umweltschädlichen Charakters von aromatischen Mineralölen paraffinische und/oder naphthenische Mineralöle eingesetzt.

Im Rahmen der vorliegenden Erfindung werden ganz bevorzugt Isoparaffin-basierte Mineralöle eingesetzt, das heißt also paraffinische Mineralöle, in denen die Kohlenwasserstoffe mehrheitlich eine acyclische, verzweigte Struktur aufweisen. Entsprechende Mineralöle können zahlreich käuflich erworben werden, beispielsweise von der Fa. ExxonMobil Chemical. Die besonders bevorzugten Isoparaffin-basierten Mineralöle sind beispielsweise unter dem Handelsnamen Isopar erhältlich.

Ganz besonders bevorzugte Reinigungszusammensetzungen enthalten, bezogen auf die Gesamtmenge der Reinigungszusammensetzung, nicht mehr als 10 Gew.-%, bevorzugt nicht mehr als 5 Gew.-%, nochmals bevorzugt keine aromatischen Mineralöle.

Der Anteil des mindestens einen Mineralöls beträgt, bezogen auf die Gesamtmenge der Reinigungszusammensetzung, von 5 bis 30 Gew.-%. Ein bevorzugter Anteilsbereich ist von 10 bis 20 Gew.-%.

Die erfindungsgemäße Reinigungszusammensetzung enthält zudem mindestens ein bipolares organisches Lösemittel (L) ausgewählt aus der Gruppe der aliphatischen Monoalkohole mit 4 bis 14 Kohlenstoffatomen.

Besonders bevorzugt ist der Einsatz von 2-Ethylhexanol. Der Anteil des mindestens einen bipolaren organischen Lösemittels (L) beträgt, bezogen auf die Gesamtmenge der Reinigungszusammensetzung, von 5 bis 50 Gew.-%. Bevorzugte Anteilsbereiche sind von 10 bis 40 Gew.-%, insbesondere bevorzugt von 15 bis 35 Gew.-%.

Ganz besonders bevorzugt besteht die erfindungsgemäße Reinigungszusammensetzung zu mindestens 80 Gew.-%, bevorzugt zu mindestens 90 Gew.-%, nochmals bevorzugt zu 100 Gew.-% aus Dimethylsulfoxid, mindestens einem Mineralöl sowie mindestens einem bipolaren organischen Lösemittel (L) ausgewählt aus der Gruppe der aliphatische Monoalkohole mit 4 bis 14 Kohlenstoffatomen. Wenn überhaupt, enthält die erfindungsgemäße Reinigungszusammensetzung demzufolge weitere Bestandteile wie beispielsweise weitere organische Lösemittel nur in untergeordneten Anteilen.

Gegenstand der vorliegenden Erfindung ist ebenfalls ein Verfahren zur Reinigung von Komponenten, das heißt hier Gegenständen, Bauteilen und/oder Anlagen sowie Teilen solcher Anlagen, bei dem die erfindungsgemäße Reinigungszusammensetzung zur Anwendung gebracht wird.

Alle oben beschriebenen besonderen und bevorzugten Ausführungsformen hinsichtlich der erfindungsgemäßen Reinigungszusammensetzung gelten selbstverständlich auch in Bezug auf das erfindungsgemäße Verfahren.

Die Anwendung der Reinigungszusammensetzung kann dabei auf unterschiedlichste Art und Weise erfolgen. Die zu reinigende Komponente kann beispielsweise in der Zusammensetzung für eine bestimmte Zeitdauer gelagert werden und/oder mit der Zusammensetzung abgespritzt und/oder durchgespült werden. Alternativ oder zusätzlich ist es möglich, die zu reinigende Komponente unter zusätzlicher Anwendung von Reinigungsequipment wie Bürsten oder Lappen zu reinigen.

Die zu reinigenden Komponenten beziehungsweise die zu reinigenden Oberflächen der zu reinigenden Komponenten sind bevorzugt metallischer Natur.

Nicht zuletzt Gegenstand der vorliegenden Erfindung ist eine Komponente, das heißt hier ein Gegenstand, Bauteil, eine Anlage oder ein Teil einer solchen Anlage, das durch das erfindungsgemäße Verfahren gereinigt wurde.

### Beispiele

Zur Bestimmung der Reinigungsqualität unterschiedlicher Reinigungszusammen-setzungen und -komponenten wurde folgende Methode gewählt.

Als Substrat dienten mit einer gehärteten Standard-Elektrotauchlackierung der Firma BASF Coatings GmbH beschichtete Stahlbleche der Abmessungen 30 x 60 cm. Darauf wurden im Abstand von etwa 30 cm jeweils ein Fleck mit einem Durchmesser von etwa 5 cm eines blauen Standard-Wasserbasislacks (WBL) der Firma BASF Coatings GmbH sowie ein Fleck mit einem Durchmesser von etwa 5 cm einer 0,01%igen Lösung von Silikonöl AK 1.000 der Firma Wacker in Butylglykol hergestellt. Das Blech wurde anschließend bei einer Temperatur von 40°C über einen Zeitraum von 10 Minuten getrocknet.

Anschließend wurden die so behandelten mit verschiedenen Reinigungszusammen-setzungen und -komponenten analog Tabelle 1 behandelt, indem mit einem mit den Reinigungszusammensetzungen und -komponenten getränktes Tuch zum Abwischen der Flecken verwendet wurde. Dabei wurde nur zweimal mit dem Tuch über den entsprechenden Fleck gewischt.

Die resultierenden Bleche wurden anschließend getrocknet und bezüglich einer verbliebenen Blaufärbung an der Stelle des Fleckes des blauen Wasserbasislacks beurteilt. Eine verbliebene Blaufärbung wies hierbei auf eine unzureichende Reinigungswirkung der Reinigungszusammensetzungen und -komponenten gegenüber dem Wasserbasislack und seinen Bestandteilen hin.

Im Folgenden wurde das Blech bei einer Temperatur von 80°C über einen Zeitraum von 30 Minuten getrocknet, auf Raumtemperatur abkühlen lassen und anschließend mit einem üblichen Zweikomponentenklarlack in einer Zielschichtdicke (Trockenfilmschichtdicke) von 30 Mikrometern im Bereich des Flecks der 0,01%igen Lösung von Silikonöl Wacker AK 1.000 in Butylglykol beschichtet. Das Blech wurde dann 20 Minuten bei Raumtemperatur abgelüftet und anschließend bei einer Temperatur von 140°C über einen Zeitraum von 20 Minuten eingebrannt. Die erhaltene Klarlackierung wurde anschließend bezüglich Benetzungsfehlstellen beurteilt. Dabei weisen Benetzungsfehlstellen darauf hin, dass die Reinigungswirkung der Reinigungszusammensetzungen und -komponenten gegenüber dem Silikonöl unzureichend ist.

In Tabelle 1 sind die Reinigungszusammensetzungen und -komponenten zusammen mit den nach dieser Vorschrift erhaltenen Ergebnissen wiedergegeben.

**Tabelle 1: Verschiedene Reinigungszusammen-setzungen und -komponenten und die entsprechenden Ergebnisse der Reinigungsversuche**

| Zusammensetzung | Blaufärbung des gereinigten Flecks vorhanden | Beurteilung bezüglich der Reinigungskraft gegenüber Standard-WBL | Benetzungsfehlstellen vorhanden | Beurteilung gegenüber Silikonöl |
|---|---|---|---|---|
| 100% NMP | Nein | iO | Ja | niO |
| 100% DMSO | Nein | iO | Ja | niO |
| 100% Isopar L | Ja | niO | Nein | iO |
| 100% Isopar V | Ja | niO | Nein | iO |
| 100% 2-Ethylhexanol | Ja | niO | Ja | niO |
| 60% DMSO 25% 2-Ethylhexanol 10% Isopar L 5% Isopar V | Nein | iO | Nein | iO |
| 45% DMSO 30% 2-Ethylhexanol 20% Isopar L 5% Isopar V | Nein | iO | Nein | iO |
| 70% DMSO 20% 2-Ethylhexanol | Nein | iO | Nein | iO |
| 10% Isopar L | | | | |

Die Beispiele zeigen, dass die erfindungsgemäßen Reinigungszusammensetzungen hervorragend zur Reinigung geeignet sind. Dabei sind sie sogar besser, als das alternativ eingesetzte, aber gesund- und umweltschädliche NMP. Auch gegenüber dem Einsatz von DMSO und Mineralölen sind Vorteile zu identifizieren. Es wird also eine Zusammensetzung bereitgestellt, die hervorragend reinigt, in der aber gleichzeitig auf besonders gesund- und umweltschädliche Komponenten verzichtet werden kann.

## Patentansprüche

1. Reinigungszusammensetzung umfassend
20 bis 90 Gew.-% Dimethylsulfoxid,
5 bis 30 Gew.-% mindestens eines Mineralöls (M), und 5 bis 50 Gew.-% mindestens eines bipolaren organischen Lösemittels (L) ausgewählt aus der Gruppe der aliphatischen Monoalkohole mit 4 bis 14 Kohlenstoffatomen,
wobei die angegebenen Anteilsbereiche jeweils auf das Gesamtgewicht der Reinigungszusammensetzung bezogen sind.

2. Reinigungszusammensetzung nach Anspruch 1, **dadurch gekennzeichnet, dass** sie
35 bis 80 Gew.-% Dimethylsulfoxid,
10 bis 30 Gew.-% mindestens eines Mineralöls (M), und 10 bis 40 Gew.-% mindestens eines bipolaren organischen Lösemittels (L) ausgewählt aus der Gruppe der aliphatischen Monoalkohole mit 4 bis 14 Kohlenstoffatomen,
jeweils bezogen auf das Gesamtgewicht der Reinigungszusammensetzung, enthält.

3. Reinigungszusammensetzung nach Anspruch 1 oder 2, **dadurch gekennzeichnet, dass** sie mindestens ein paraffinisches und/oder naphthenisches Mineralöl (M) enthält.

4. Reinigungszusammensetzung nach Anspruch 3, **dadurch gekennzeichnet, dass** sie mindestens ein Isoparaffin-basiertes Mineralöl (M) enthält.

5. Reinigungszusammensetzung nach Anspruch 1 bis 4, **dadurch gekennzeichnet, dass** sie, bezogen auf die Gesamtmenge der Reinigungszusammensetzung, nicht mehr als 5 Gew.-% an aromatischen Mineralölen, bevorzugt keine aromatischen Mineralöle, enthält.

6. Reinigungszusammensetzung nach Anspruch 1 bis 5, **dadurch gekennzeichnet, dass** das bipolare organische Lösemittel (L) 2-Ethylhexanol ist.

7. Reinigungszusammensetzung nach Anspruch 1 bis 6, **dadurch gekennzeichnet, dass** sie zu mindestens 80 Gew.-%, bevorzugt zu mindestens 90 Gew.-%, nochmals bevorzugt zu 100 Gew.-% aus Dimethylsulfoxid, mindestens einem Mineralöl sowie mindestens einem bipolaren organischen Lösemittel ausgewählt aus der Gruppe der aliphatischen Monoalkohole mit 4 bis 14 Kohlenstoffatomen besteht.

8. Verfahren zur Reinigung von Komponenten, das heißt Gegenständen, Bauteilen und/oder Anlagen sowie Teilen solcher Anlagen, bei dem eine Reinigungszusammensetzung gemäß Anspruch 1 bis 7 zur Anwendung gebracht wird.

9. Verwendung einer Reinigungszusammensetzung nach Anspruch 1 bis 7 zur Reinigung von Komponenten, das heißt Gegenständen, Bauteilen und/oder Anlagen sowie Teilen solcher Anlagen.

## Claims

1. Cleaning composition comprising
from 20 to 90% by weight of dimethyl sulfoxide, from 5 to 30% by weight of at least one mineral oil (M), and
from 5 to 50% by weight of at least one bipolar organic solvent (L) selected from the group consisting of aliphatic monoalcohols having from 4 to 14 carbon atoms,
where the ranges of proportions indicated are in each case based on the total weight of the cleaning composition.

2. Cleaning composition according to Claim 1, **characterized in that** is contains
from 35 to 80% by weight of dimethyl sulfoxide, from 10 to 30% by weight of at least one mineral oil (M), and
from 10 to 40% by weight of at least one bipolar organic solvent (L) selected from the group consisting of aliphatic monoalcohols having from 4 to 14 carbon atoms,
in each case based on the total weight of the cleaning composition.

3. Cleaning composition according to Claim 1 or 2, **characterized in that** it contains at least one paraffinic and/or naphthenic mineral oil (M).

4. Cleaning composition according to Claim 3, **characterized in that** it contains at least one isoparaffin-based mineral oil (M).

5. Cleaning composition according to any of Claims 1 to 4, **characterized in that** it contains, based on the total amount of the cleaning composition, not more than 5% by weight of aromatic mineral oils, preferably no aromatic mineral oils.

6. Cleaning composition according to any of Claims 1 to 5, **characterized in that** the bipolar organic solvent (L) is 2-ethylhexanol.

7. Cleaning composition according to any of Claims 1 to 6, **characterized in that** it consists to an extent of at least 80% by weight, preferably at least 90% by weight, more preferably 100% by weight, of dimethyl sulfoxide, at least one mineral oil and at least one bipolar organic solvent selected from the group consisting of aliphatic monoalcohols having from 4 to 14 carbon atoms.

8. Method for cleaning components, i.e. articles, components and/or plants and parts of such plants, wherein a cleaning composition according to any of Claims 1 to 7 is employed.

9. Use of a cleaning composition according to any of Claims 1 to 7 for cleaning components, i.e. articles, components and/or plants and parts of such plants.

## Revendications

1. Composition de nettoyage comprenant :
20 à 90 % en poids de diméthylsulfoxyde,
5 à 30 % en poids d'au moins une huile minérale (M), et 5 à 50 % en poids d'au moins un solvant organique bipolaire (L) choisi dans le groupe des monoalcools aliphatiques de 4 à 14 atomes de carbone,
les plages de proportions indiquées se rapportant à chaque fois au poids total de la composition de nettoyage.

2. Composition de nettoyage selon la revendication 1, **caractérisée en ce qu'**elle contient :
35 à 80 % en poids de diméthylsulfoxyde,
10 à 30 % en poids d'au moins une huile minérale (M), et 10 à 40 % en poids d'au moins un solvant organique bipolaire (L) choisi dans le groupe des monoalcools aliphatiques de 4 à 14 atomes de carbone,
à chaque fois par rapport au poids total de la composition de nettoyage.

3. Composition de nettoyage selon la revendication 1 ou 2, **caractérisée en ce qu'**elle contient au moins une huile minérale paraffinique et/ou naphténique (M).

4. Composition de nettoyage selon la revendication 3, **caractérisée en ce qu'**elle contient au moins une huile minérale à base d'isoparaffine (M).

5. Composition de nettoyage selon les revendications 1 à 4, **caractérisée en ce qu'**elle ne contient, par rapport à la quantité totale de la composition de nettoyage, pas plus de 5 % en poids d'huiles minérales aromatiques, de préférence pas d'huiles minérales aromatiques.

6. Composition de nettoyage selon les revendications 1 à 5, **caractérisée en ce que** le solvant organique bipolaire (L) est le 2-éthylhexanol.

7. Composition de nettoyage selon les revendications 1 à 6, **caractérisée en ce qu'**elle est constituée par au moins 80 % en poids, de préférence au moins 90 % en poids, de manière davantage préférée 100 % en poids, de diméthylsulfoxyde, au moins une huile minérale et au moins un solvant organique bipolaire choisi dans le groupe des monoalcools aliphatiques de 4 à 14 atomes de carbone.

8. Procédé de nettoyage de composants, à savoir d'objets, de composants et/ou d'installations, ainsi que de parties de telles installations, selon lequel une composition de nettoyage selon les revendications 1 à 7 est utilisée.

9. Utilisation d'une composition de nettoyage selon les revendications 1 à 7 pour le nettoyage de composants, à savoir d'objets, de composants et/ou d'installations, ainsi que de parties de telles installations.
